# EUROPEAN PATENT SPECIFICATION

(11) **EP 2 644 486 B1**
(45) Date of publication and mention of the grant of the patent: **27.04.2016**
(21) Application number: 13160195.7
(22) Date of filing: 20.03.2013
(51) Int. Cl.: B62J 6/04

(54) **Motorcycle**
Motorrad
Motocyclette

(30) Priority: 28.03.2012 JP 2012074589
(43) Date of publication of application: 02.10.2013
(73) Proprietor: Honda Motor Co., Ltd., Tokyo 107-8556 (JP)
(72) Inventor: Oguchi, Tsuyoshi, Saitama Saitama 351-0193 (JP)
(74) Representative: Quinterno, Giuseppe

(56) References cited:
- EP-A1- 2 397 366
- JP-A- 2005 028 933

## Description

The present invention relates to a motorcycle, and more particularly to a motorcycle having a tail lamp device which is mounted on a rear end of the motorcycle, of the kind defined in the preamble of claim 1.

JP-2005 028933 -A, on which the preamble of claim 1 is based, discloses a motorcycle with a tail lamp device, a vehicle body cover in which an opening portion is formed, wherein an exposed surface which faces the rear side of the vehicle body forms a light emitting face of the tail lamp device, a tail lamp bulb which constitutes a light emitting source of a tail lamp which functions as a position lamp, wherein the tail lamp bulb is arranged at a position in front of the exposed surface.

EP-2 397 366-A1 discloses a motorcycle tail light structure that completely prevents the white light that illuminates the license plate from being seen from the rear side of the motorcycle.

JP-A-2009-206039 discloses a tail lamp device where a bulb is arranged at the center of a reflector which is arranged to face a lens in an opposed manner, and a non-light-transmitting cover member which is formed so as to conceal a center portion of the bulb is mounted outside the lens. Due to such a constitution, it is possible to make a light emitting face of the tail lamp uniformly emit light while preventing a possibility that only the bulb portion strongly emits light.

It is an object of the present invention to provide a motorcycle having a tail lamp device which can prevent the increase in the number of parts of the tail lamp device and can prevent the enlargement of a light emitting face of a tail light toward the outside while mounting a cover member in a manner such that a bulb portion is not visible from the outside.

To achieve the above-mentioned object, as a first technical feature the present invention provides a motorcycle having the features defined in claim 1.

A second technical feature of the present invention lies in that the tail lamp bulb (43) is arranged at a position below the exposed surface (40L, 40R) in the vertical direction of the vehicle body such that a bulb axis (J) extends upwardly.

A third technical feature of the present invention lies in that a lower edge (57) of the opening portion (90) is formed into an L shape having a corner portion (57a), and the tail lamp bulb (43) is arranged in the vicinity of the corner portion (57a).

A fourth technical feature of the present invention lies in that the exposed surface (40L, 40R), the opening portion (90) and the tail lamp bulb (43) are formed of a pair of left and right exposed surfaces (40L, 40R), a pair of left and right opening portions (90) and a pair of left and right tail lamp bulbs (43) respectively in the vehicle widthwise direction, and lower edges (57) of the respective opening portions (90) are formed in a downwardly inclined manner toward the outside in the vehicle widthwise direction, and each tail lamp bulb (43) is arranged at a position close to the center in the vehicle widthwise direction.

A fifth technical feature of the present invention lies in that the tail lamp device (40) comprises left and right tail-lamp reflector portions (50) which form a pair and are communicated with each other through a communication portion (63) at a portion which is covered by the vehicle body cover (35) at the center in the vehicle widthwise direction.

A sixth technical feature of the present invention lies in that an outer lens (42) is positioned behind the tail lamp reflector portion (50) and a light blocking treatment which is capable of preventing an illumination light of the tail lamp bulb (43) from passing through the vehicle body cover (35) or the outer lens (42) rearwardly in the longitudinal direction of the vehicle body is applied to the vehicle body cover (35) or to the outer lens (42) positioned behind the tail-lamp reflector portion (50) in the longitudinal direction of the vehicle body.

A seventh technical feature of the present invention lies in that the tail lamp bulb (43) is inserted and fixed to the tail-lamp reflector portion (50) from below the vehicle body, and the tail lamp bulb (43) is removable by removing the vehicle body cover (35) positioned behind the tail lamp bulb (43) in the longitudinal direction of the vehicle body from the vehicle body.

According to the first technical feature, the tail lamp bulb which constitutes the light emitting source of the tail lamp which functions as the position light is arranged at the position either above or below the exposed surface in the vertical direction of the vehicle body and also at the position where the tail lamp bulb overlaps with the vehicle body cover as viewed from the rear side of the vehicle body. Due to such a constitution, it is unnecessary to additionally provide a cover member which covers the tail lamp bulb, and it is possible to prevent the tail lamp bulb from being directly visible from the outside. Accordingly, the increase in the number of parts can be prevented, and the light emitting face can ensure a sufficiently large area without being enlarged in the lateral direction. Further, the degree of freedom in laying out the bulb can be enhanced.

Furthermore, the tail-lamp reflector portion which reflects light from the tail lamp bulb is formed into a shape which allows the tail-lamp reflector portion to house the tail lamp bulb and to cover the area of the exposed surface, and the tail lamp bulb is arranged close to the exposed surface. Due to such a constitution, a portion of the exposed surface can be illuminated by an illumination light of the tail lamp bulb while preventing the tail lamp bulb from being visible from the outside. Further, the tail lamp bulb is arranged close to the exposed surface and hence, for example, even when the tail-lamp reflector portion is formed into an elongated shape having a bent portion (for example, an L shape), it is possible to make the whole tail-lamp reflector portion having an elongated shape emit light uniformly by arranging the tail lamp bulb close to the bent portion.

According to the second technical feature, the tail lamp bulb is arranged at the position below the exposed surface in the vertical direction of the vehicle body such that the bulb axis extends upwardly. Due to such a constitution, the direction of an illumination light from the tail lamp bulb can be easily directed toward an upper side of the vehicle body.

Further, the mounting and the removal of the tail lamp bulb can be performed easily from below the tail lamp device.

According to the third technical feature, the lower edge of the opening portion is formed into an L shape having the corner portion, and the tail lamp bulb is arranged in the vicinity of the corner portion. Due to such a constitution, the tail lamp bulb can be arranged in an approximately triangular region formed at the center in the vehicle widthwise direction and below the opening portion. Accordingly, the tail lamp bulb can be arranged below the opening portion while inhibiting a size of the tail lamp device in the vertical direction.

According to the fourth technical feature, the exposed surface, the opening portion and the tail lamp bulb are formed of a pair of left and right exposed surfaces, a pair of left and right opening portions and a pair of left and right tail lamp bulbs respectively in the vehicle widthwise direction, and the respective lower edges of the opening portions are formed in a downwardly inclined manner toward the outside in the vehicle widthwise direction, and the tail lamp bulb is arranged at the position close to the center in the vehicle widthwise direction. Due to such a constitution, the tail lamp bulb can be arranged in an approximately triangular region formed at the center in the vehicle widthwise direction and below the opening portion. Accordingly, the tail lamp bulb can be arranged below the opening portion while inhibiting a size of the tail lamp device in the vertical direction.

According to the fifth technical feature, the left and right tail-lamp reflector portions which form a pair are communicated with each other through the communication portion at the portion which is covered by the vehicle body cover at the center in the vehicle widthwise direction. With the provision of the communication portion, an illumination light of the tail lamp bulb on one side reaches the reflector portion on the other side. Accordingly, it is possible to easily make the left and right reflector portions uniformly emit light. Further, it is possible to acquire the tail lamp device having a peculiar light distribution characteristic that the illumination light of the bulb on the other side is visible from the exposed surface on one side depending on a viewing angle.

According to the sixth technical feature, light blocking treatment which prevents an illumination light of the tail lamp bulb from passing through the outer lens is applied to the vehicle body cover or to the outer lens positioned behind the tail-lamp reflector portion in the longitudinal direction of the vehicle body. Accordingly, it is possible to prevent an illumination light of the tail lamp bulb from passing through the vehicle body cover and the outer lens in the rearward direction of the vehicle body and being viewed from a rear side of the vehicle body.

According to the seventh technical feature, the tail lamp bulb is inserted and fixed to the tail-lamp reflector portion from below the vehicle body, and the tail lamp bulb is removable by removing from the vehicle body the vehicle body cover positioned behind the tail lamp bulb in the longitudinal direction of the vehicle body. Accordingly, a tail lamp bulb exchanging operation can be easily performed.

Further features and advantages of the invention will become apparent from the following description provided with reference to the annexed drawings wherein:
Figure 1 is a right side view of a motorcycle with a tail lamp device according to one embodiment of the present invention;
Figure 2 is a rear view of the motorcycle;
Figure 3 is an enlarged rear view of the motorcycle;
Figure 4 is an explanatory view of the structure of a tail lamp device in a state where an outer lens and an inner lens are removed;
Figure 5 is a front view of the tail lamp device;
Figure 6 is a right side view of the tail lamp device;
Figure 7 is a plan view of the tail lamp device;
Figure 8 is a rear view of the tail lamp device;
Figure 9 is a front view of the tail lamp device in a state where the outer lens is removed;
Figure 10 is a perspective view of the tail lamp device in a state where the outer lens and the inner lens are removed;
Figure 11 is a cross-sectional view taken along a line 11-11 in Fig. 3;
Figure 12 is a cross-sectional view taken along a line 12-12 in Fig. 3;
Figure 13 is a cross-sectional view taken along a line 13-13 in Fig. 3; and
Figure 14 is a cross-sectional view taken along a line 14-14 in Fig. 3;

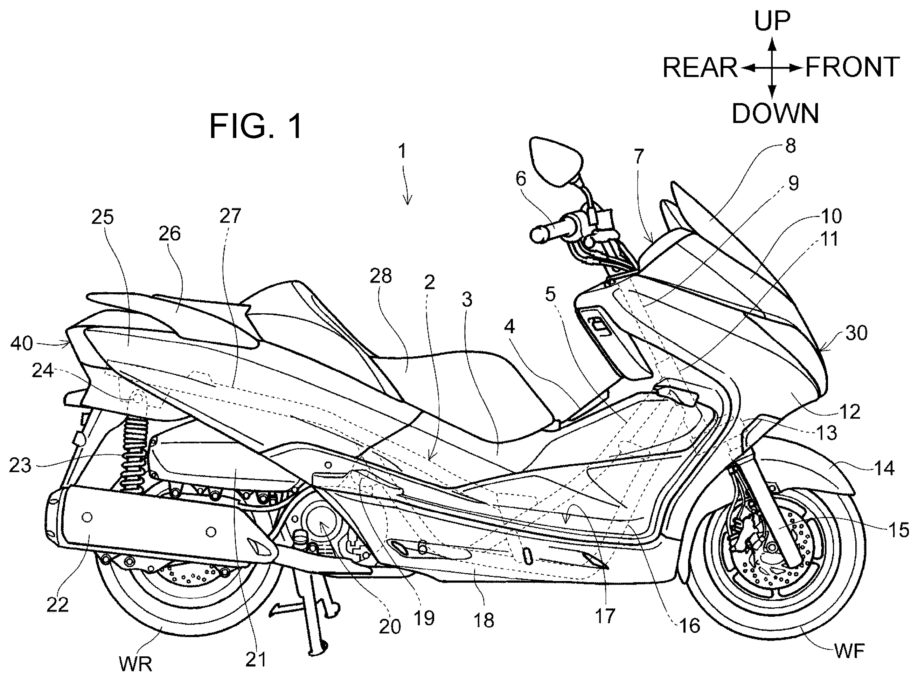

Hereinafter, a preferred embodiment of the present invention is explained in detail in conjunction with drawings. Fig. 1 is a light side view of a motorcycle 1 with a tail lamp device according to one embodiment of the present invention. A vehicle body frame 2 includes a head pipe 11 which rotatably and pivotally supports a steering stem 9, a pair of left and right main frames 5 and a pair of left and right under frames 16 which extend toward a rear lower side of a vehicle body from the head pipe 11, and a rear frame 27 which is connected to a rear side of the main frames 5.

An under bracket 13 which supports a pair of left and light front forks 15 is fixed to a lower end portion of the steering stem 9. On the other hand, a steering handle 6 is mounted on an upper end portion of the steering stem 9. A front wheel WF is rotatably and pivotally supported on a lower end portion of the front fork 15.

A pivot shaft 19 is mounted on a connecting portion between rear end portions of the main frames 5 and the rear frame 27. A unit swing 20 which is an integral body constituted of an engine and an automatic transmission is swingably and pivotally supported on the pivot shaft 19. A rear wheel WR which constitutes a drive wheel is rotatably and pivotally supported on the unit swing 20, and an air cleaner box 21 and a muffler 22 are supported on the unit swing 20. A rear side of the unit swing 20 is suspended from a pair of left and right rear cushions 23 which is swingably supported on a support portion 24 formed on the rear frame 27.

On a front side of the head pipe 11, a front cowl 10 having a wind screen 8 and a pair of left and right front side cowls 12 are mounted. A front lamp (headlight unit) 30 is arranged at a position between both cowls 10, 12. A meter device 7 is arranged behind the wind screen 8, and a front fender 14 which is supported on the front forks 15 is arranged above and behind the front wheel WF.

A floor panel 3 which has a straddling portion 4 raised toward an upper side of the vehicle body at the center position in the vehicle widthwise direction and a pair of left and right foot placement floors 17 is provided behind the head pipe 11, and a seat 28 is mounted above the floor panel 3. An under cowl 18 is provided below the foot placement floors 17, and a pair of left and right rear side cowls 25 is mounted on a rear portion of the floor panel 3. A tail lamp device 40 (tail lamp unit) is arranged behind the rear side cowls 25. A passenger grip 26 is mounted on a rear side of the seat.

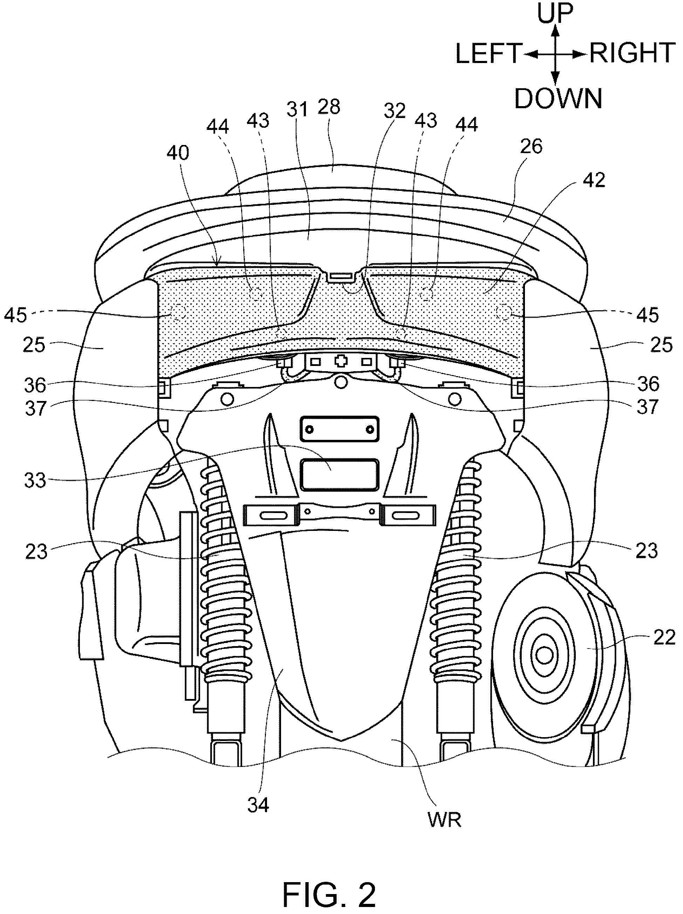

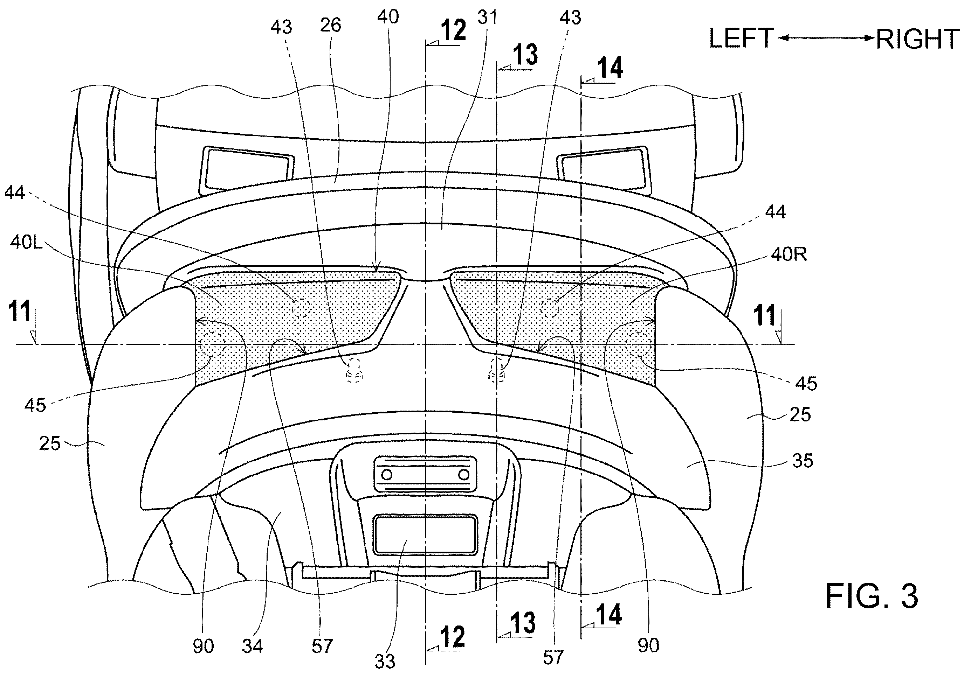

Fig. 2 is a rear view of the motorcycle 1. Fig. 3 is an enlarged rear view of the motorcycle 1. An upper cover 31 is arranged between the passenger grip 26 and the tail lamp device 40. A lower cover 35 having a shape which allows the lower cover 35 to cover a portion of the tail lamp device 40 is arranged on a lower portion of the tail lamp device 40. Fig. 2 shows a state where the lower cover 35 is removed.

The tail lamp device 40 is configured such that only exposed surfaces 40L, 40R (meshed portions shown in Fig. 3) which form light emitting faces are visible through approximately rectangular opening portions 90 defined by the upper cover 31, the lower cover 35 and the pair of left and right rear side cowls 25 which constitute a vehicle body cover. The lower cover 35 forms lower edges 57 of the opening portions 90 and a distal end of a portion of the lower cover 35 which is arranged at the center in the vehicle widthwise direction and extends toward an upper side of the vehicle body so as to conceal the tail lamp device 40 is engaged with an engaging portion 32 formed on the upper cover 31.

The tail lamp device 40 is configured such that a pair of left and right tail lamps which constitutes position lamps, a pair of left and right brake lamps which constitutes braking lamps and a pair of left and right blinker devices which constitutes direction indication lamps are housed in a single housing. Blinker lamp bulbs 45 are arranged on outer sides of the exposed surfaces 40L, 40R in the vehicle widthwise direction respectively and, further, brake lamp bulbs 44 are arranged at the approximate center of the exposed surfaces 40L, 40R respectively. Tail lamp bulbs 43 are arranged at positions outside the exposed surfaces 40L, 40R where the tail lamp bulbs 43 are covered with the lower cover 35. The tail lamp device 40 according to the present invention is characterized by being configured such that the tail lamp bulbs 43 are arranged outside the exposed surfaces 40L, 40R so that the tail lamp bulbs 43 are not visible from the outside.

A rear fender 34 and a license lamp 33 are mounted on a lower portion of the lower cover 35. Further, as shown in Fig. 2, when the lower cover 35 is removed from the vehicle body, sockets 36 of the tail lamp bulbs 43 and lines 37 are exposed on a lower portion of the tail lamp device 40 and hence, changing the tail lamp bulbs 43 can be done easily.

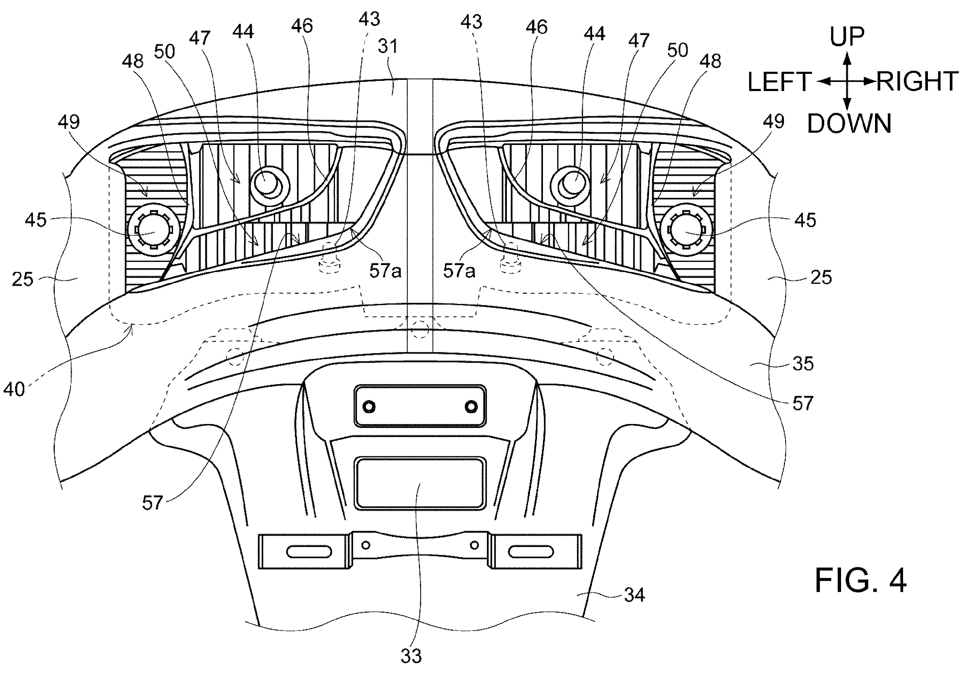

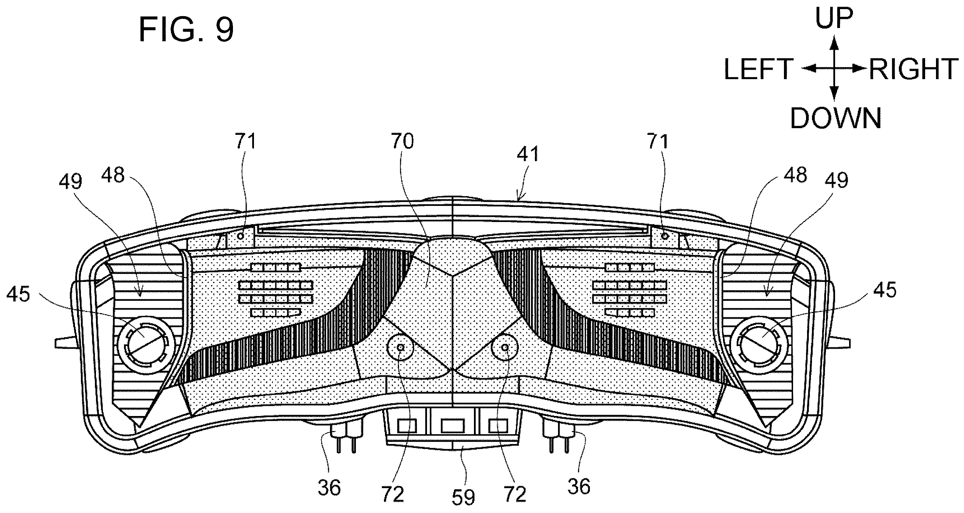

Fig. 4 is an explanatory view of the structure of the tail lamp device 40 in a state where an outer lens 42 and an inner lens 70 (see Fig. 9) are removed. The tail lamp bulb 43, the brake lamp bulb 44 and the blinker lamp bulb 45 are respectively housed in reflector portions partitioned by partition plates 46, 48. To be more specific, the tail lamp bulb 43 is housed in a tail lamp reflector portion 50, the brake lamp bulb 44 is housed in a brake lamp reflector portion 47, and the blinker lamp bulb 45 is housed in a blinker lamp reflector portion 49. On the respective reflector portions 47, 49 and 50, reflection surfaces having different stepped shapes from each other are formed.

Here, the brake lamp reflector portion 47 and the blinker lamp reflector portion 49 fall within an area of the exposed surface 40L, 40R, while with respect to the tail lamp reflector portion 50, a portion of the tail lamp reflector portion 50 appears within the exposed surface 40L, 40R and other portions of the tail lamp reflector portion 50 are concealed by the lower cover 35. Due to such a constitution, it is possible to prevent the tail lamp bulb 43 from being directly visible from the outside without additionally providing a cover member which covers the tail lamp bulb 43. Accordingly, the increase in the number of parts can be prevented, and a light emitting face can ensure a sufficient area.

Further, the respective lower edges 57 of the opening portions 90 are formed in a downwardly inclined manner toward the outside in the vehicle widthwise direction, and the tail lamp bulbs 43 are arranged at the positions close to the center in the vehicle widthwise direction. Due to such a constitution, the tail lamp bulbs 43 can be arranged in an approximately triangular region formed at the center in the vehicle widthwise direction and below the opening portions 90. Accordingly, the tail lamp bulbs 43 can be arranged below the opening portions 90 while inhibiting a size of the tail lamp device in the vertical direction. In this embodiment, a portion of the tail lamp reflector portion 50 which extends over the area of the exposed surface 40L, 40R is formed into an approximately L shape as an elongated shape having a bent portion, and the tail lamp bulb 43 is arranged close to the bent portion. Alternatively, the tail lamp bulb 43 is arranged in the vicinity of an L-shaped corner portion 57a of the tail lamp reflector portion 50 and hence, it is possible to make the whole tail lamp reflector portion 50 having an elongated shape emit light uniformly.

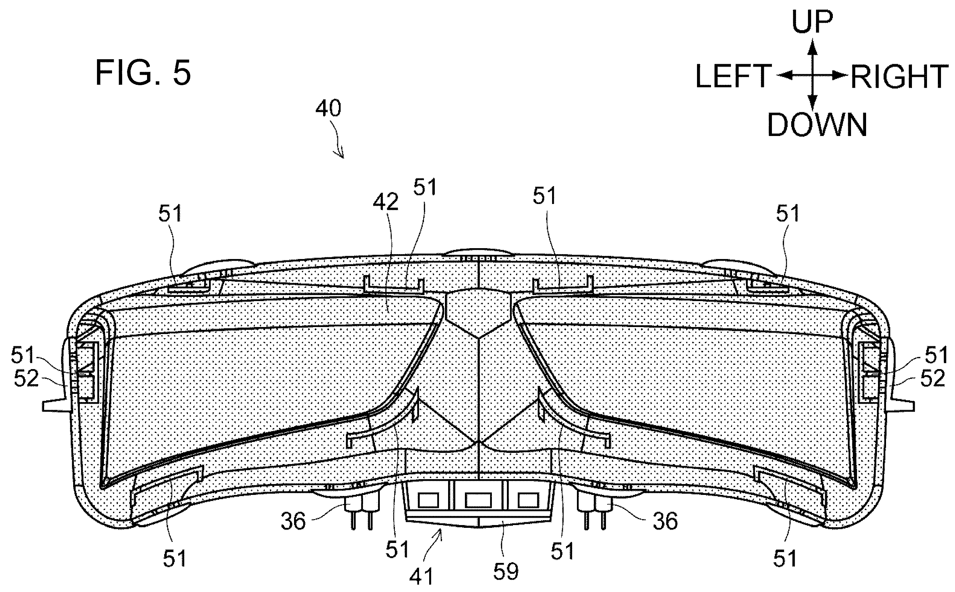

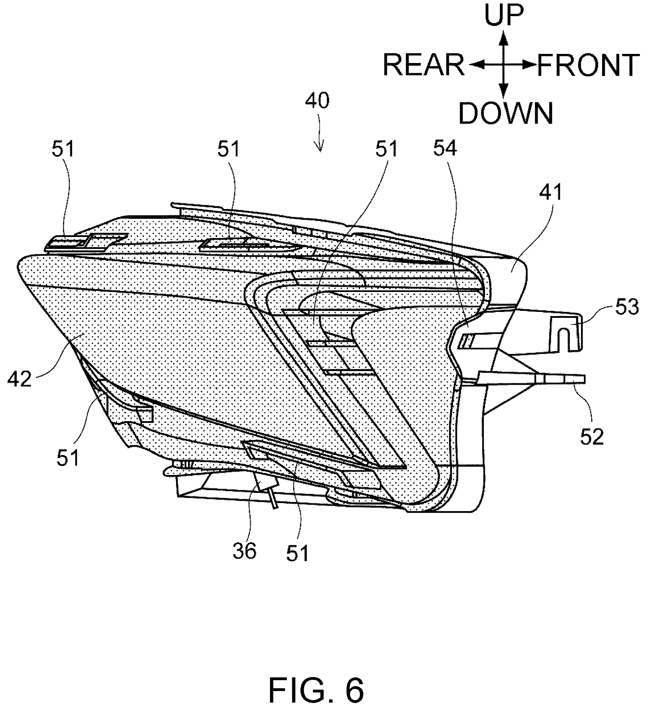

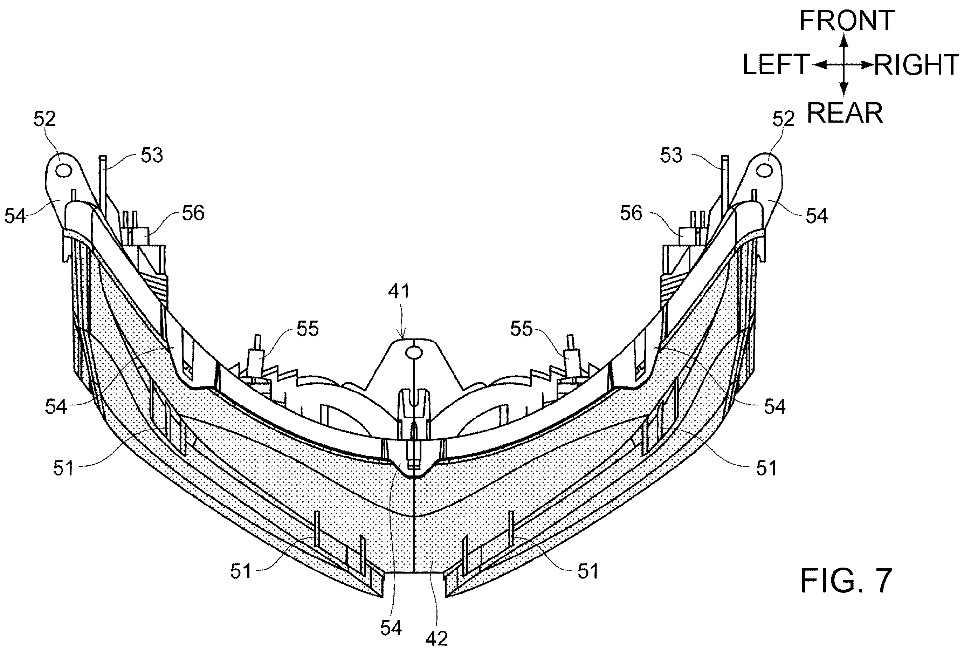

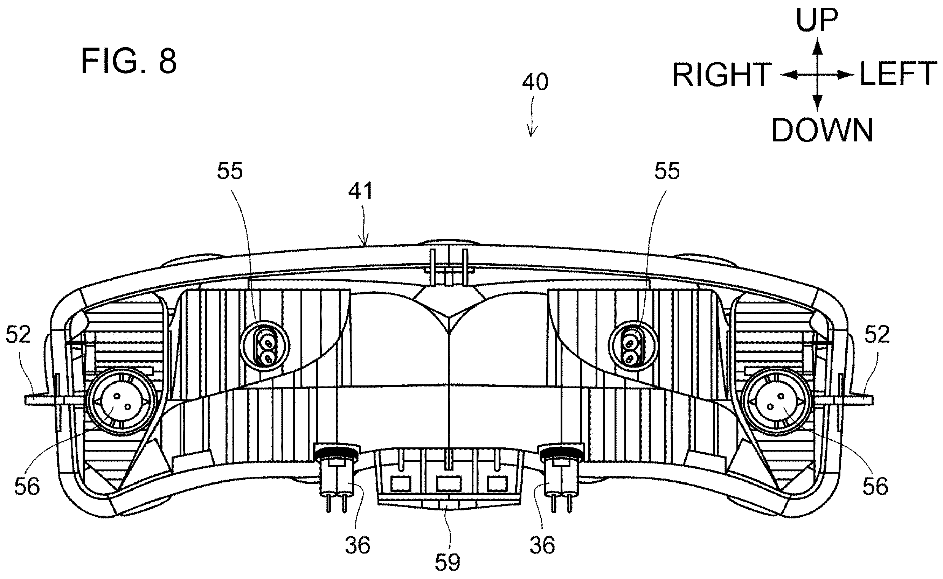

Fig. 5 is a front view of the tail lamp device 40. Fig. 6 is a right side view of the tail lamp device 40, Fig. 7 is a plan view of the tail lamp device 40, and Fig. 8 is a rear view of the tail lamp device 40. The tail lamp device 40 is configured such that the inner lens 70 (see Fig. 9) formed using a red transparent resin or the like and the outer lens 42 formed using a non-colored transparent resin or the like (meshed portion in the drawing) are mounted on the housing 41 formed using a colored resin or the like.

Around approximately rectangular portions which define the exposed surfaces 40L, 40R shown in Fig. 3, five engaging pawls 51 are formed on the outer lens 42 on each side. The periphery of the opening portion 90 (see Fig. 3) is positioned by the engaging pawls 51. The portion which forms the exposed surface 40L, 40R is formed in a projecting manner toward a rear side of the vehicle body. An engaging flange 59 which is engaged with the lower cover 35 by means of a center engaging hole and left and right positioning holes is formed on a lower portion of the housing 41. Engaging pawls 54 which are engaged with an outer edge portion of the outer lens 42 are formed around the housing 41 at nine positions in total, that is, at three positions on an upper surface, at two positions on a side, and at four positions on a lower surface. The housing 41 and the outer lens 42 are engaged with each other by the engaging pawls 54 and, thereafter, are joined to each other by welding at a plurality of positions.

As shown in Fig. 7, the tail lamp device 40 has a curved shape projecting toward a rear side of the vehicle body as viewed in a plan view, and engaging stays 52, 53 which are engaged with the rear side cowls 25 (see Fig. 3) are formed on both end portions of the tail lamp device 40. Further, as shown in Fig. 8, the socket 36 of the tail lamp bulb 43 is inserted and fixed from a vehicle-body lower side of the housing 41, and a socket 55 of the brake lamp bulb 44 and a socket 56 of the blinker lamp bulb 45 are inserted and fixed from a vehicle-body front side of the housing 41.

Fig. 9 is a front view of the tail lamp device 40 in a state where the outer lens 42 is removed. In this embodiment, the red transparent inner lens 70 is used, an orange bulb is adopted as the blinker lamp bulb 45, and the non-colored transparent outer lens 42 is adopted so that the tail lamp device 40 can acquire a particular external appearance. A white bulb is applied to the tail lamp bulb 43 and the brake lamp bulb 44. A lens cut which diffuses an illumination light into the predetermined direction is applied to the inner lens 70. The inner lens 70 is welded to the housing 41 at a plurality of positions and, thereafter, is fastened to the outer lens 41 by small bolts by way of an upper fixing portion 71 and a lower fixing portion 72.

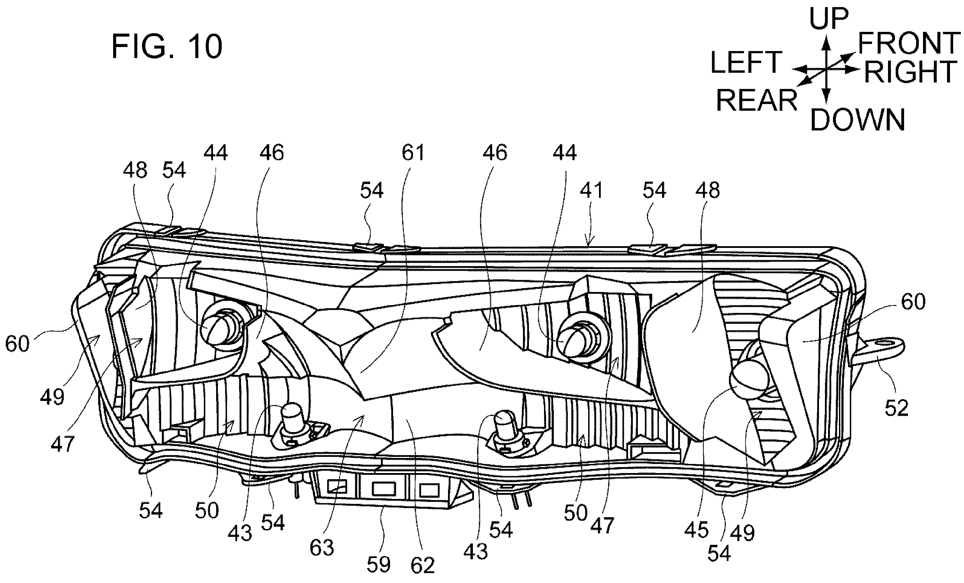

Fig. 10 is a perspective view of the tail lamp device 40 in a state where the outer lens 42 and the inner lens 70 are removed. As described previously, the tail lamp reflector portion 50 and the brake lamp reflector portion 47 are partitioned by the partition plate 46 which is inclined downwardly toward the outside in the vehicle widthwise direction so as to prevent illumination lights from both portions from interfering with each other. In the same manner, the tail lamp reflector portion 50, the brake lamp reflector portion 47 and the blinker lamp reflector portion 49 are partitioned by the partition plate 48 which is directed in the vertical direction of the vehicle body. Further, a light blocking plate 60 which restricts a diffusion range of light from the blinker lamp bulb 45 in the vehicle widthwise direction is arranged outside the blinker lamp reflector portion 49 in the vehicle widthwise direction.

A raised portion 61 which is raised toward a rear side of the vehicle body and the partition plate 46 are arranged between the left and right brake lamp reflector portions 47 and hence, there is no possibility that illumination lights from the left and right brake lamp reflector portions 47 interfere with each other. On the other hand, only a light guiding projecting portion 62 which guides an illumination light is arranged between the left and right tail lamp reflector portions 50 so that the left and right tail lamp reflector portions 50 are communicated with each other in the vehicle widthwise direction by a communication portion 63. Due to such a constitution, an illumination light of the tail lamp bulb 43 on one side reaches the reflector portion 50 on the other side so that it is possible to easily make the left and right reflector portions emit light uniformly.

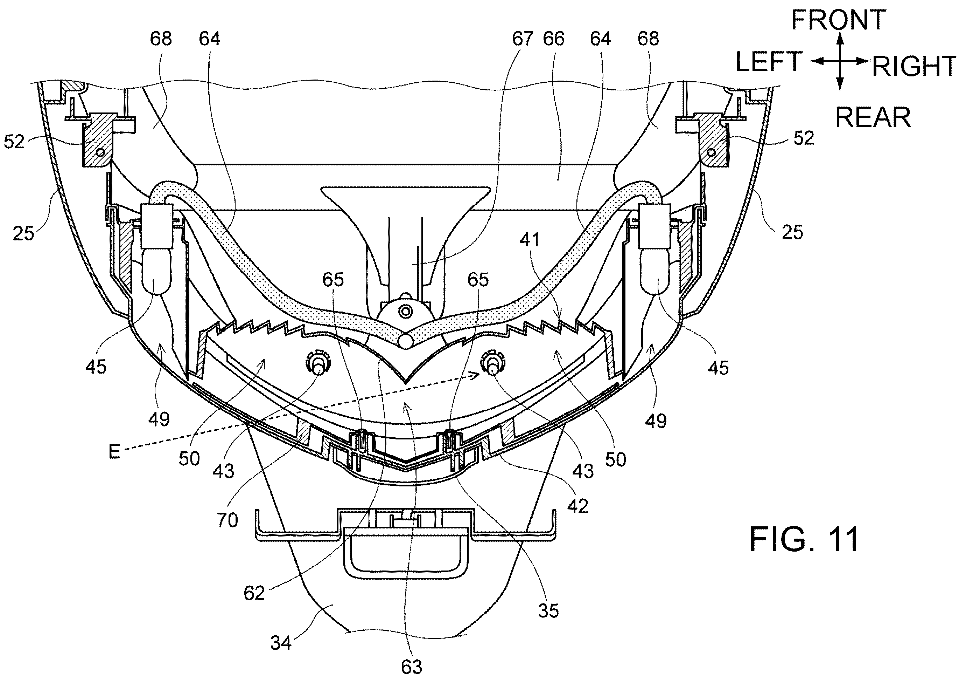

Fig. 11 is a cross-sectional view taken along a line 11-11 in Fig. 3. The tail lamp device 40 is fixed to a stay 67 which extends from a vehicle body frame at a center portion of the housing 41 in the vehicle widthwise direction. The stay 67 is fixed to a cross member 66 which connects left and right auxiliary frames 68 mounted on the rear frame 27 (see Fig. 1). Lines 64 which are connected to the sockets 56 of the blinker lamp bulbs 45 are bundled with lines for other bulbs at the center in the vehicle widthwise direction. The inner lens 70 is fixed to the outer lens 42 by four fastening bolts 65 directed toward a rear side of the vehicle body besides welding. In the drawing, two fastening screws 65 which are threaded into the lower fixing portion 72 are shown.

As described previously, the left and right tail lamp reflector portions 50 are communicated with each other in the vehicle width direction by the communication portion 63 so that an illumination light of the tail lamp bulb 43 on one side reaches the reflector portion 50 on the other side. Due to such a constitution, it is possible to make the left and right reflector portions 50 emit light uniformly. Further, although the center of the tail lamp device 40 in the vehicle widthwise direction is concealed by the lower cover 35 when the tail lamp device 40 is viewed from a rear side of the vehicle body, for example, when the exposed surface on a left side is viewed from the direction E shown in the drawing, the tail lamp bulb 43 on a right side can be visually recognized. Accordingly, it is possible to acquire the tail lamp device 40 having a peculiar light distribution characteristic.

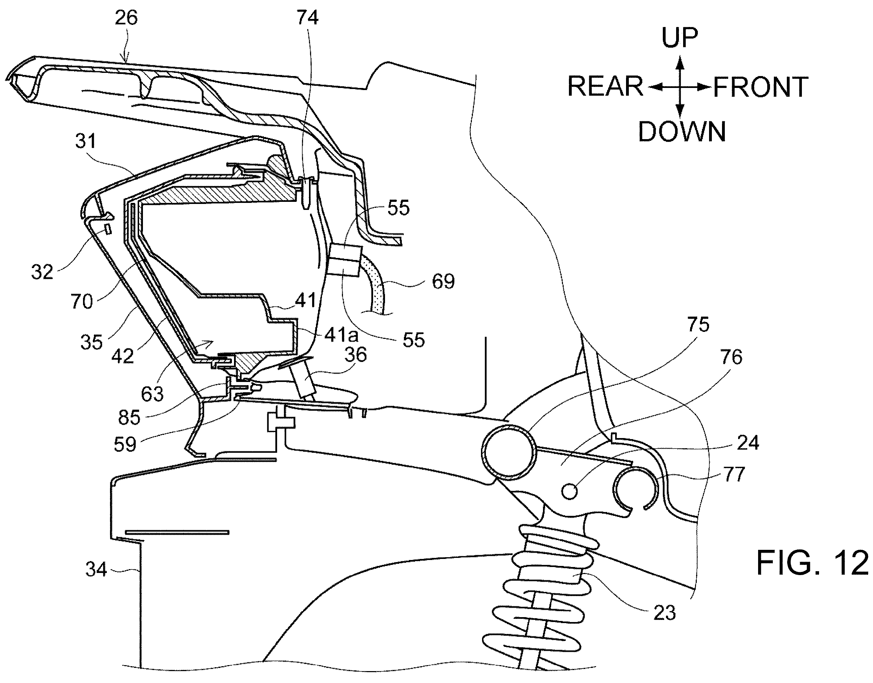

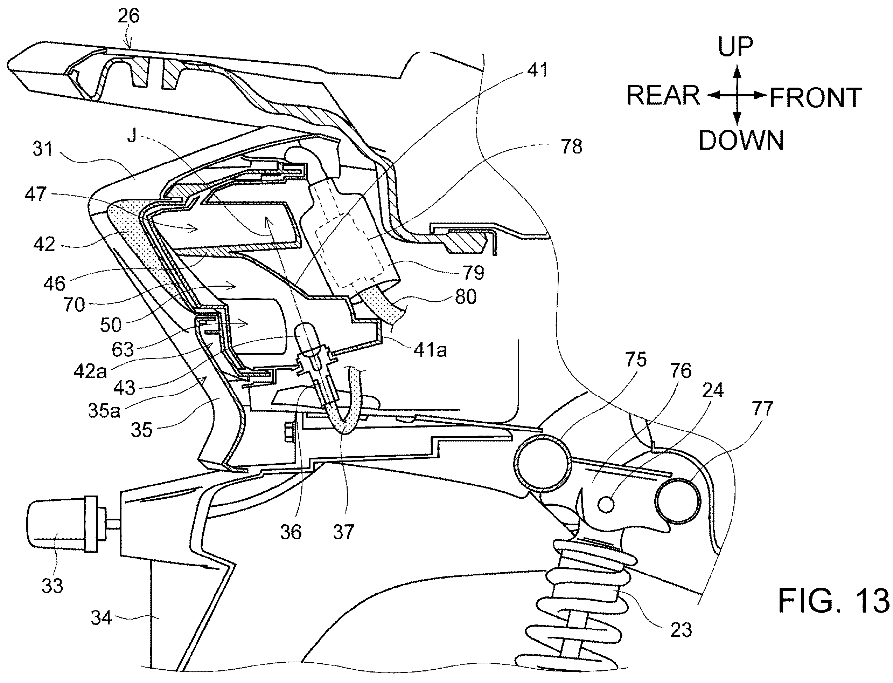

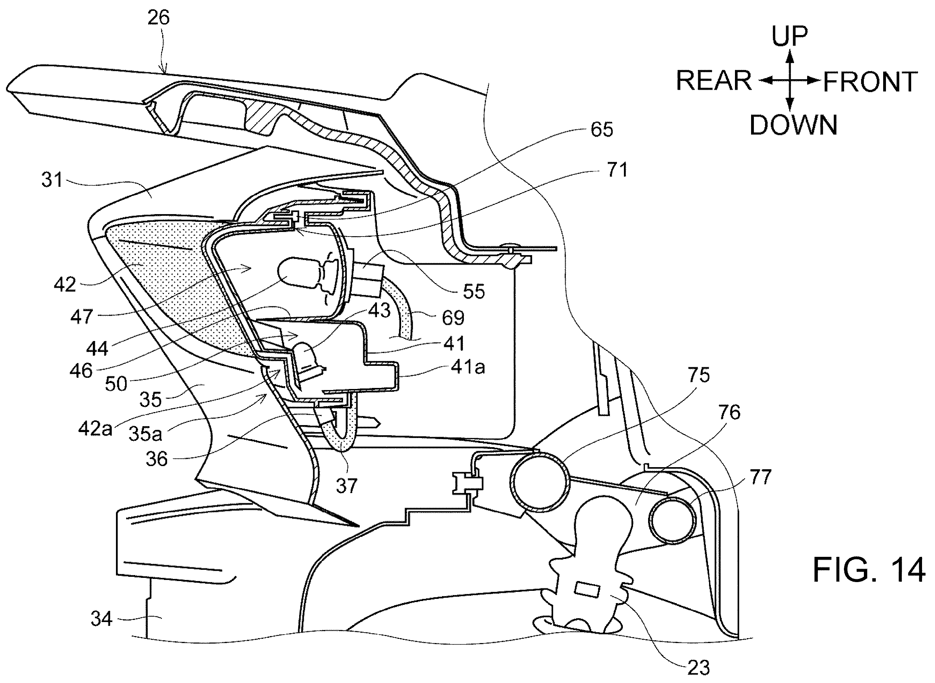

Fig. 12 is a cross-sectional view taken along a line 12-12 in Fig. 3. The passenger grip 26 is made of metal such as aluminum and has a hollow structure. The support portion 24 of the rear cushion 23 is mounted on a support plate 76 which is arranged between auxiliary frames 75, 77 mounted on the rear frame 27. The upper cover 31 is fixed to the housing 41 of the tail lamp device 40 by fastening bolts 74 on a front side thereof in the longitudinal direction of the vehicle body, and is engaged with the lower cover 35 at the engaging portion 32 on a rear side thereof in the longitudinal direction of the vehicle body. An engaging stay 85 which is engaged with the engaging flange 59 formed on the housing 41 of the tail lamp device 40 is formed on a lower portion of the lower cover 35. A line 69 is connected to the socket 55 of the break lamp bulb 44. A recessed portion 41a which enhances a light distribution characteristic of the tail lamp bulb 43 (see Fig. 13, Fig. 14) is formed on a lower portion of a rear portion of the housing 41.

Fig. 13 is a cross-sectional view taken along a line 13-13 in Fig. 3. As described previously, the tail lamp device 40 is formed into a curved shape projecting toward a rear side of the vehicle body as viewed in a plan view and hence, on a front side of the vehicle body at the center in the vehicle widthwise direction, a space is formed where a socket 78 having a cover 79 to which a line 80 is connected and the like are efficiently arranged. The partition plate 46 arranged between the break lamp reflector portion 47 and the tail lamp reflector portion 50 extends toward a rear side of the vehicle body to a position close to a back surface of the inner lens 70. The tail lamp bulb 43 is arranged at a position below the exposed surface 40L, 40R (see Fig. 3) in the vertical direction of the vehicle body in a state where a bulb axis J extends upwardly. Due to such a constitution, it is possible to have the direction of an illumination light from the tail lamp bulb 43 easily directed toward an upper side of the vehicle body, and mounting and dismounting of the tail lamp bulb 43 from below the tail lamp device 40 can be performed easily.

Fig. 14 is a cross-sectional view taken along a line 14-14 in Fig. 3. The upper fixing portion 71 of the inner lens 70 is fixed to the outer lens 42 by the fastening bolts 65. Since the upper fixing portion 71 and the fastening screw 65 are covered with the upper cover 31 and hence, an external appearance of the motorcycle 1 is maintained. Further, the tail lamp bulb 43 is mounted on a bottom portion of the tail lamp reflector portion 50 and hence, it is possible to make a mounting portion of the tail lamp bulb 43 barely visible from the outside. In this embodiment, to prevent a case where an illumination light from the tail lamp bulb 43 passes through the lower cover 35 and is viewed from the outside, light blocking treatment is performed such that a reflection surface formed by aluminum vapor deposition, silver coating or the like is formed on a portion 35a of the lower cover 35 which overlaps with the tail lamp valve 43 as visible from a rear side of the vehicle body. This surface treatment may be also applied to a portion 42a of the outer lens 42 or the inner lens 70.

A shape and the structure of the tail lamp device, the numbers and the configurations of the respective bulbs, materials and shapes of the housing, the outer lens and the inner lens, the lens cut structures of the respective lens, a shape of the opening portion of the exposed surface, the structure of exterior parts such as the upper cover, the lower cover and the rear side cowls which form the opening portion are not limited to the above-mentioned embodiment, and various modifications are conceivable. The tail lamp is not limited to a motorcycle and is applicable to various kinds of vehicles such as a saddle-ride type three-wheeled vehicle or four-wheeled vehicle.

### Main Reference Numerals

- 1:: motorcycle
- 25:: rear side cowl (vehicle body cover)
- 26:: passenger grip
- 31:: upper cover (vehicle body cover)
- 32:: engaging portion
- 35:: lower cover (vehicle body cover)
- 40:: tail lamp device
- 40L, 40R:: exposed surface
- 43:: tail lamp bulb
- 44:: brake lamp bulb
- 45:: blinker lamp bulb
- 47:: brake lamp reflector portion
- 49:: blinker lamp reflector portion
- 50:: tail lamp reflector portion
- 57:: lower edge
- 63:: communication portion
- 70:: inner lens
- 90:: opening portion

## Claims

1. A motorcycle (1) comprising a tail lamp device (40), a vehicle body cover (25, 31, 35) in which an opening portion (90) is formed, wherein only an exposed surface (40L, 40R) which faces a rear side of a vehicle body through the opening portion (90) formed in the vehicle body cover (25, 31, 35) forms a light emitting face of the tail lamp device (40), a tail lamp bulb (43) which constitutes a light emitting source of a tail lamp which functions as a position light, wherein the tail lamp bulb (43) is arranged close to the exposed surface (40L, 40R);
**characterized by** a tail-lamp reflector portion (50) which is adapted to reflect light from the tail lamp bulb (43) and which is formed on a housing (41) of the tail lamp device (40), wherein the tail lamp bulb (43) is arranged at a position either above or below the exposed surface (40L, 40R) in the vertical direction of the vehicle body and also at a position where the tail lamp bulb (43) overlaps with the vehicle body cover (35) as viewed from the rear side of the vehicle body, and wherein
the tail-lamp reflector portion (50) is formed into a shape which allows the tail-lamp reflector portion (50) to house the tail lamp bulb (43) and to cover an area of the exposed surface (40L, 40R), so that a portion of the exposed surface (40L, 40R) can be illuminated by an illumination light of the tail lamp bulb (43).

2. The motorcycle according to claim 1, wherein the tail lamp bulb (43) is arranged at a position below the exposed surface (40L, 40R) in the vertical direction of the vehicle body such that a bulb axis (J) extends upwardly.

3. The motorcycle according to claim 1 or claim 2, wherein
a lower edge (57) of the opening portion (90) is formed into an L shape having a corner portion (57a), and
the tail lamp bulb (43) is arranged in the vicinity of the corner portion (57a).

4. The motorcycle according to claim 1 or claim 2, wherein
the exposed surface (40L, 40R), the opening portion (90) and the tail lamp bulb (43) are formed of a pair of left and right exposed surfaces (40L, 40R), a pair of left and right opening portions (90) and a pair of left and right tail lamp bulbs (43) respectively in the vehicle widthwise direction, and
lower edges (57) of the respective opening portions (90) are formed in a downwardly inclined manner toward the outside in the vehicle widthwise direction, and
each tail lamp bulb (43) is arranged at a position close to the center in the vehicle widthwise direction.

5. The motorcycle according to claim 4, wherein the tail lamp device (40) comprises left and right tail-lamp reflector portions (50) which form a pair and are communicated with each other through a communication portion (63) at a portion which is covered by the vehicle body cover (35) at the center in the vehicle widthwise direction.

6. The motorcycle according to any one of claims 1 to 5, wherein an outer lens (42) is positioned behind the tail lamp reflector portion (50) in the longitudinal direction of the vehicle body, and a light blocking treatment, which is capable of preventing an illumination light of the tail lamp bulb (43) from passing through the vehicle body cover (35) or the outer lens (42) rearwardly in the longitudinal direction of the vehicle body, is applied to the vehicle body cover (35) or to the outer lens (42) positioned behind the tail-lamp reflector portion (50) in the longitudinal direction of the vehicle body.

7. The motorcycle according to any one of claims 1 to 6, the tail lamp bulb (43) is inserted and fixed to the tail-lamp reflector portion (50) from below the vehicle body, and the tail lamp bulb (43) is removable by removing the vehicle body cover (35) positioned behind the tail lamp bulb (43) in the longitudinal direction of the vehicle body from the vehicle body.

## Patentansprüche

1. Motorrad (1) mit einer Heckleuchtenvorrichtung (40), einer Fahrzeugkörperabdeckung (25, 31, 35), in der ein Öffnungsabschnitt (90) ausgebildet ist, wobei nur eine freiliegende Fläche (40L, 40R), die durch den Öffnungsabschnitt (90), der in der Fahrzeugkörperabdeckung (25, 31, 35) ausgebildet ist, einer Rückseite eines Fahrzeugkörpers zugewandt ist, eine lichtemittierende Fläche der Heckleuchtenvorrichtung (40) bildet, einer Heckleuchtenglühbirne (43), die eine lichtemittierende Quelle einer Heckleuchte, die als ein Positionslicht wirkt, darstellt, wobei die Heckleuchtenglühbirne (43) nahe der freiliegenden Fläche (40L, 40R) angeordnet ist;
**gekennzeichnet durch** einen Heckleuchtenreflektorabschnitt (50), der dazu ausgebildet ist, Licht von der Heckleuchtenglühbirne (43) zu reflektieren, und der an einem Gehäuse (41) der Heckleuchtenvorrichtung (40) ausgebildet ist, wobei die Heckleuchtenglühbirne (43) entweder bei einer Position oberhalb oder unterhalb der freiliegenden Fläche (40L, 40R) in der Vertikalrichtung des Fahrzeugkörpers angeordnet ist, und auch bei einer Position angeordnet ist, bei der von der Rückseite der Fahrzeugkörpers aus betrachtet die Heckleuchtenglühbirne (43) mit der Fahrzeugkörperabdeckung (35) überlappt, und wobei
der Heckleuchtenreflektorabschnitt (50) eine Form aufweist, die ermöglicht, dass die Heckleuchtenvorrichtung (50) die Heckleuchtenglühbirne (43) aufnimmt und einen Bereich der freiliegenden Fläche (40L, 40R) bedeckt, so dass ein Abschnitt der freiliegenden Fläche (40L, 40R) von einem Leuchtmittel der Heckleuchtenglühbirne (43) beleuchtet werden kann.

2. Motorrad nach Anspruch 1, wobei die Heckleuchtenglühbirne (43) in der Vertikalrichtung des Fahrzeugkörpers bei einer Position unterhalb der freiliegenden Fläche (40L, 40R) angeordnet ist, so dass eine Glühbirnenachse (J) sich nach oben erstreckt.

3. Motorrad nach Anspruch 1 oder Anspruch 2, wobei
eine untere Kante (57) des Öffnungsabschnitts (90) in einer L-Form ausgebildet ist, die einen Eckenabschnitt (57a) aufweist, und
die Heckleuchtenglühbirne (43) in der Nähe des Eckenabschnitts (57a) angeordnet ist.

4. Motorrad nach Anspruch 1 oder Anspruch 2, wobei
die freiliegende Fläche (40L, 40R), der Öffnungsabschnitt (90) und die Heckleuchtenglühbirne (43) in der Fahrzeugbreitenrichtung als ein Paar von linken und rechten freiliegenden Flächen (40L, 40R), ein Paar von linken und rechten Öffnungsabschnitten (90) und ein Paar von linken und rechten Heckleuchtenglühbirnen (43) ausgebildet sind, und
untere Kanten (57) der Öffnungsabschnitte (90) jeweils in einer nach unten schräg verlaufenden Weise zur Außenseite in der Fahrzeugbreitenrichtung hin ausgebildet sind, und
jede Heckleuchtenglühbirne (43) bei einer Position nahe der Mitte in der Fahrzeugbreitenrichtung angeordnet ist.

5. Motorrad nach Anspruch 4, wobei die Heckleuchtenvorrichtung (40) linke und rechte Heckleuchtenreflektorabschnitte (50) aufweist, die ein Paar bilden und durch einen Verbindungsabschnitt (63) bei einem Abschnitt, der von der Fahrzeugkörperabdeckung (35) bei der Mitte in der Fahrzeugbreitenrichtung abgedeckt ist, miteinander verbunden sind.

6. Motorrad nach einem der Ansprüche 1 bis 5, wobei ein äußeres Glas (42) in der Längsrichtung des Fahrzeugkörpers hinter dem Heckleuchtenreflektorabschnitt (50) angeordnet ist, und wobei eine lichtblockierende Behandlung, die ermöglicht, dass ein Leuchtmittel der Heckleuchtenglühbirne (43) daran gehindert wird, die Fahrzeugkörperabdeckung (35) oder das äußere Glas (42) rückwärts in der Längsrichtung des Fahrzeugkörpers zu passieren, auf die Fahrzeugkörperabdeckung (35) oder das äußere Glas (42), das in der Längsrichtung des Fahrzeugkörpers hinter dem Heckleuchtenreflektorabschnitt (50) angeordnet ist, angewandt ist.

7. Motorrad nach einem der Ansprüche 1 bis 6, wobei die Heckleuchtenglühbirne (43) von unterhalb des Fahrzeugkörpers in den Heckleuchtenreflektorabschnitt (50) eingeführt und fixiert wird, und die Heckleuchtenglühbirne (43) entfernbar ist, indem die Fahrzeugkörperabdeckung (35), die in der Längsrichtung des Fahrzeugkörpers hinter der Heckleuchtenglühbirne (43) angeordnet ist, von dem Fahrzeugkörper entfernt wird.

## Revendications

1. Motocycle (1) comprenant un dispositif de feu arrière (40), un carénage de carrosserie de véhicule (25, 31, 35) dans lequel une portion d'ouverture (90) est formée, dans lequel seulement une surface exposée (40L, 40R) qui fait face à un côté arrière d'une carrosserie de véhicule à travers la portion d'ouverture (90) formée dans le carénage de carrosserie de véhicule (25, 31, 35) forme une face de lumière du dispositif de feu arrière (40),
une ampoule de feu arrière (43) qui constitue une source de lumière d'un feu arrière qui sert de feu de position, dans lequel l'ampoule de feu arrière (43) est agencée près de la surface exposée (40L, 40R) ;
**caractérisé par** une portion de réflecteur de feu arrière (50) qui est adaptée pour réfléchir de la lumière de l'ampoule de feu arrière (43) et qui est formée sur un logement (41) du dispositif de feu arrière (40), dans lequel l'ampoule de feu arrière (43) est agencée à une position au-dessus ou en dessous de la surface exposée (40L, 40R) dans la direction verticale de la carrosserie de véhicule et également à une position où l'ampoule de feu arrière (43) chevauche le carénage de carrosserie de véhicule (35) en vue à partir du côté arrière de la carrosserie de véhicule, et dans lequel la portion de réflecteur de feu arrière (50) est conformée en une forme qui permet à la portion de réflecteur de feu arrière (50) de loger l'ampoule de feu arrière (43) et de couvrir une zone de la surface exposée (40L, 40R), pour qu'une portion de la surface exposée (40L, 40R) puisse être éclairée par une lumière d'éclairage de l'ampoule de feu arrière (43).

2. Motocycle selon la revendication 1, dans lequel l'ampoule de feu arrière (43) est agencée dans une position en dessous de la surface exposée (40L, 40R) dans la direction verticale de la carrosserie de véhicule de telle sorte qu'un axe d'ampoule (J) s'étende vers le haut.

3. Motocycle selon la revendication 1 ou la revendication 2, dans lequel
un bord inférieur (57) de la portion d'ouverture (90) est formé en une forme de L possédant une portion de coin (57a), et
l'ampoule de feu arrière (43) est agencée dans le voisinage de la portion de coin (57a).

4. Motocycle selon la revendication 1 ou la revendication 2, dans lequel
la surface exposée (40L, 40R), la portion d'ouverture (90) et l'ampoule de feu arrière (43) sont formées d'une paire de surfaces exposées gauche et droite (40L, 40R), d'une paire de portions d'ouverture gauche et droite (90) et d'une paire d'ampoules de feu arrière gauche et droite (43) respectivement dans la direction de largeur du véhicule, et
des bords inférieurs (57) des portions d'ouverture respectives (90) sont formées de manière inclinée vers le bas vers l'extérieur dans la direction de largeur du véhicule, et chaque ampoule de feu arrière (43) est agencée dans une position près du centre dans la direction de largeur du véhicule.

5. Motocycle selon la revendication 4, dans lequel le dispositif de feu arrière (40) comprend des portions de réflecteur de feu arrière gauche et droite (50) qui forment une paire et sont en communication l'une avec l'autre par l'intermédiaire d'une portion de communication (63) dans une portion qui est couverte par le carénage de carrosserie de véhicule (35) au centre dans la direction de largeur du véhicule.

6. Motocycle selon l'une quelconque des revendications 1 à 5, dans lequel une lentille extérieure (42) est positionnée derrière la portion de réflecteur de feu arrière (50) dans la direction longitudinale de la carrosserie de véhicule, et un traitement occultant la lumière, qui est capable d'empêcher une lumière d'éclairage de l'ampoule de feu arrière (43) de passer à travers le carénage de carrosserie de véhicule (35) ou la lentille extérieure (42) vers l'arrière dans la direction longitudinale de la carrosserie de véhicule, est appliqué sur le carénage de carrosserie de véhicule (35) ou sur la lentille extérieure (42) positionnée derrière la portion de réflecteur de feu arrière (50) dans la direction longitudinale de la carrosserie de véhicule.

7. Motocycle selon l'une quelconque des revendications 1 à 6, l'ampoule de feu arrière (43) est insérée et fixée à la portion de réflecteur de feu arrière (50) à partir d'en dessous de la carrosserie de véhicule, et l'ampoule de feu arrière (43) est amovible en enlevant le carénage de carrosserie de véhicule (35) positionné derrière l'ampoule de feu arrière (43) dans la direction longitudinale de la carrosserie de véhicule à partir de la carrosserie de véhicule.
